# EUROPÄISCHE PATENTSCHRIFT

(11) **EP 3 526 067 B1**
(45) Veröffentlichungstag und Bekanntmachung des Hinweises auf die Patenterteilung: **24.08.2022**
(21) Anmeldenummer: 17788111.7
(22) Anmeldetag: 13.10.2017
(51) Int. Cl.: B60J 10/16, B60J 10/18, B60J 10/40, B60J 10/235

(54) **EINRICHTUNG ZUR RANDSEITIGEN DICHTUNG EINES TEILS ODER EINER FENSTERSCHEIBE EINER FAHRZEUGKAROSSERIE UND VERFAHREN ZUR HERSTELLUNG DER DICHTUNGSEINRICHTUNG**
DEVICE FOR SEALING A PART OR WINDOWPART OF A VEHICLE BODY AND A METHOD FOR PRODUCING THE SEALING DEVICE
DISPOSITIF D'ÉTANCHÉITÉ D'UNE PIÈCE OU D'UNE RONDELLE DE FENÊTRE D'UN CORPS DE VÉHICULE ET PROCÉDÉ DE FABRICATION DE LA DISPOSITIF D'ÉTANCHÉITÉ

(30) Priorität: 17.10.2016 DE 102016119691
(43) Veröffentlichungstag der Anmeldung: 21.08.2019
(73) Patentinhaber: CQLT SaarGummi Technologies S.à.r.l., 5544 Remich (LU)
(72) Erfinder: LORIG, Michael, 82131 Gauting (DE); ROUX, Sébastien, 76520 St-Aubin-Celloville (FR); THIEL, Daniel, 66701 Beckingen (DE)
(74) Vertreter: Patentanwälte Bernhardt / Wolff Partnerschaft mbB
(86) Internationale Anmeldenummer: PCT/EP2017/001210
(87) Internationale Veröffentlichungsnummer: WO 2018/072869

(56) Entgegenhaltungen:
- EP-A1- 2 463 134
- EP-A2- 2 803 518
- DE-A1-102008 026 922
- GB-A- 2 287 429
- US-A1- 2014 212 621

## Beschreibung

Die Erfindung betrifft eine Einrichtung zur randseitigen Dichtung eines Teils oder einer Fensterscheibe einer Fahrzeugkarosserie, die ein Befestigungselement aufweist, mittels dessen sich die Dichtungseinrichtung an einem Karosserieflansch befestigen lässt und das zum Halten zumindest eines Dichtungsstrangs vorgesehen ist, wobei das Befestigungselement einen Hauptschenkel umfasst, an dem ein Zierelement befestigt ist, das eine nach Installation an der Fahrzeugkarosserie sichtbare Sichtfläche aufweist, und zumindest einen von dem Hauptschenkel abstehenden Verbindungsschenkel umfasst, der zur Aufnahme des Dichtungsstrangs vorgesehen ist.

Die Erfindung betrifft ferner ein Verfahren zur Herstellung einer solchen Dichtungseinrichtung.

Solche durch Benutzung bekannten Dichtungseinrichtungen werden zur Ausbildung von Fensterführungsdichtungen und Fensterschachtdichtungen von Automobilen verwendet. Das Zierelement, der Dichtungsstrang und das Befestigungselement werden einzeln hergestellt und vor ihrer Installation am jeweiligen Automobil, miteinander verbunden, wobei das Zierelement auf die Außenseite des Hauptschenkels aufgeklebt oder dort festgesteckt wird und der Dichtungsstrang an den Verbindungsschenkel angesteckt oder angeklebt wird.

Aus US 2014/212621A1 ist bekannt, zur Bildung einer Fahrzeugdichtung ein Befestigungselement und ein Zierelement in einer Spritzgussform anzuordnen und durch Anspritzen eines flexiblen Materials diese miteinander zu verbinden.

Der Erfindung liegt die Aufgabe zugrunde, eine Dichtungseinrichtung der eingangs genannten Art zu schaffen, die mit weniger Aufwand installationsfertig hergestellt werden kann.

Erfindungsgemäß wird diese Aufgabe dadurch erfüllt, dass das Befestigungselement sowie das Zierelement und/oder der Dichtungsstrang aus Kunststoff oder Faserverbundwerkstoff gebildet sind und das Befestigungselement sowie das Zierelement und der Dichtungsstrang mittels Mehrkomponenten-Spritzgießen hergestellt und aneinander angeformt sind.

Eine nicht-beanspruchte Dichtungseinrichtung lässt sich herstellen, indem zunächst das Befestigungselement, das Zierelement oder der Dichtungsstrang, ggf. im Spritzgussverfahren, hergestellt wird und daran eine jeweilig andere Komponente der Dichtungseinrichtung, d.h. jeweilig das Zierelement, der Dichtungsstrang bzw. das Befestigungselement, im Spritzgussverfahren angespritzt wird.

Erfindungsgemäß wird eine Verbindung des Zierelements, des Dichtungsstrangs bzw. des Befestigungselements mit der bereits hergestellten Komponente schon bei ihrer Herstellung mittels Spritzgießen gebildet. Da der für die Dichtungseinrichtungen nach dem Stand der Technik notwendige gesonderte Verfahrensschritt zur Verbindung der Komponenten entfällt, wird eine besonders einfache und schnelle Herstellung möglich.

Während es vorstellbar wäre zunächst das Zierelement oder den Dichtungsstrang herzustellen und das Befestigungselement, ggf. gleichzeitig, an das Zierelement bzw. den Dichtungsstrang, anzuspritzen, wird in der bevorzugten Ausführungsform der Erfindung zunächst das Befestigungselement hergestellt und das Zierelement oder der Dichtungsstrang an das Befestigungselement angespritzt.

Die erfindungsgemäße Dichtungseinrichtung ist derart vorgesehen dass auch das Zierelement und der Dichtungsstrang unmittelbar aneinander angeformt sind.

In einer erfindungsgemäße

Ausgestaltung der Erfindung werden das Befestigungselement sowie das Zierelement und/oder der Dichtungsstrang mittels Mehrkomponenten-Spritzgießen hergestellt, wobei die Dichtungseinrichtung mittels einer Spritzgießmaschine gefertigt wird, die zwei oder mehrere Spritzeinheiten, aber nur eine Schließeinheit umfasst. Vorteilhaft kann die Dichtungseinrichtung mit nur einem einzigen Werkzeug in einem einzigen Arbeitsgang hergestellt werden. Die verschiedenen notwendigen einzelnen Arbeitsschritte zum Zusammensetzen der bekannten Dichtungseinrichtungen entfallen.

In einer Ausführungsform der Erfindung ist das Zierelement aus einem Kunststoff gebildet, der sich dazu eignet, zur Metallisierung, insbesondere Verchromung, des Kunststoffs mit einer elektrisch leitfähigen Schicht belegt zu werden, auf der sich, durch Galvanisieren eine Metallschicht abscheiden kann. Vorzugsweise wird zur Bildung des Befestigungselements Acrylnitril-Butadien-Styrol (ABS) benutzt, da sich dieser Kunststoff zur Metallisierung mittels des genannten Verfahrens als besonders geeignet erwiesen hat. Vorteilhaft kann das Zierelement nach Herstellung der Dichtungseinrichtung durch Spitzgießen mittels einer der aus dem Stand der Technik bekannten Kunststoffmetallisierungsverfahren mit einer metallisch aussehenden Oberfläche versehen werden.

Zur Metallisierung kann der Kunststoff beispielsweise zunächst mit einer oxidativen Metallsalzlösung gebeizt werden, um die Oberfläche aufzurauhen, anschließend die Oberfläche mit Metallkeimen, z. B. Palladium, aktiviert werden und danach chemisch unter Erzeugung einer dünnen Schicht aus Kupfer oder Nickel durch Reduktion aus Metallsalzen metallisiert werden. Dann erfolgt die Abscheidung der auf dem Kunststoff vorzusehenden Metallschicht, die dem Zierelement das metallische Aussehen verleihen soll, in einem Galvanisierbad auf der dünnen Schicht. Soll der Kunststoff verchromt werden, können zunächst Schichten aus Kupfer und Nickel abgeschieden werden, um eine gute Haftung zu erreichen.

Der Dichtungsstrang und ggf. auch das Befestigungselement können aus Kunststoff gebildet sein, der nicht zur Metallisierung geeignet oder vorgesehen ist, damit die Dichtungseinrichtung nach ihrer Herstellung mittels Spritzgießen als Ganzes in einem Kunststoffgalvanisierungsprozess behandelt werden kann, ohne dass die Galvanisierung auch an dem Dichtungsstrang bzw. dem Befestigungselement erfolgt.

Ferner könnte das Zierelement je nach erwünschtem Aussehen aus einem thermoplastischen Kunststoff gebildet werden. Um dem Zierelement ein mattes Aussehen zu verleihen, wird es bevorzugt aus auf Styrolblockcopolymeren basierendem TPE (TPS) oder aus thermoplastischem Vulkanisat (TPV) gebildet. Ferner könnte es aus Polymethylmethacrylat (PMMA), aus Polycarbonat/Acrylnitril-Butadien-Styrol (PC/ABS), aus Styrol-Acrylnitril (SAN) oder/und aus Acrylester-Styrol-Acrylnitril (ASA), gebildet sein. Dem Zierelement kann damit ein, insbesondere lackartig, glänzendes Aussehen verliehen werden.

In einer weiteren Ausgestaltung der Erfindung ist das Befestigungselement aus dem Faserverbundwerkstoff gebildet und der Faserverbundwerkstoff weist vorzugsweise als Matrix zumindest einen der Kunststoffe Polypropylen (PP), Polycarbonat (PC) oder Acrylnitril-Butadien-Styrol (ABS) und/oder eine Faserverstärkung, vorzugsweise aus Glas- oder/und Kohlefasern, auf.

Der Dichtungsstrang ist zweckmäßigerweise aus einem thermoplastischen Polymer, vorzugsweise aus auf Styrolblockcopolymeren basierendem thermoplastischem Elastomer (TPS) oder aus thermoplastischem Vulkanisat (TPV) gebildet.

In einer weiteren Ausführungsform der Erfindung weist das Befestigungselement einen von dem Hauptschenkel, vorzugsweise etwa senkrecht, abstehenden Klemm- und/oder Rastschenkel auf, der derart angeordnet ist, dass zwischen dem Klemm- und/oder Rastschenkel und dem, vorzugsweise ebenfalls etwa senkrecht von dem Hauptschenkel abstehenden, Verbindungsschenkel ein Steckschlitz zur Aufnahme des Karosserieflanschs gebildet ist, sodass die Dichtungseinrichtung zu ihrer Befestigung auf den der Karosserieflansch aufsteckbar ist.

Der Klemm- und/oder Rastschenkel und der Verbindungsschenkel sind vorzugsweise derart ausgebildet, dass die Dichtungseinrichtung bei Anordnung durch Klemm- und/oder Rastwirkung des Klemm- und/oder Rastschenkels und des Verbindungsschenkels auf dem Karosserieflansch befestigen lässt.

In einer weiteren Ausgestaltung der Erfindung sind der Verbindungsschenkel und/oder der Klemm- und/oder Rastschenkel mit Aussparungen versehen, die in Stranglängsrichtung der Dichtungseinrichtung im Abstand voneinander angeordnet sind.

Die Aussparungen können dazu dienen, am Karosserieflansch angeordneten Befestigungshaken aufzunehmen. Vorzugsweise sind die Aussparungen dann derart geformt, dass die Befestigungshaken bei Anordnung der Dichtungseinrichtung auf dem Karosserieflansch passend in sie eingreifen.

Ferner können die Aussparungen dazu vorgesehen sein, an dem Dichtungsstrang gebildete Zapfenabschnitte aufzunehmen, die aus demselben Material bestehen wie der Dichtungsstrang und vorzugsweise einteilig mit dem Dichtungsstrang gebildet sind. Vorzugsweise ragen die Zapfenabschnitte durch die Aussparungen hindurch und sind zur Anlage an dem Karosserieflansch vorgesehen, um dem Befestigungselement bei seiner Befestigung an dem Karosserieflansch Halt zu geben.

In einer Ausführungsform der Erfindung wird beim Spritzgießen Kunststoffmaterial, mittels dessen der Dichtungsstrang gebildet wird, zur Bildung von Zapfen, die von dem Dichtungsstrang vorstehen, durch die Aussparung hindurch gespritzt. Ein Spritzgußwerkzeug der genannten Spritzgussmaschine ist vorzugsweise derart vorgesehen, dass sich das den Zapfen bildende Kunststoffmaterial nicht nur innerhalb der Aussparung, sondern auch auf der dem Karosserieflansch zugewandten Seite des Verbindungsschenkels oder des Klemm- und/oder Rastschenkels anordnet, vorzugsweise derart, dass es im installierten Zustand zwischen dem Karosserieflansch und dem Verbindungsschenkel bzw. dem Klemm- und/oder Rastschenkel sitzt.

Zweckmäßigerweise umfasst die Dichtungseinrichtung einen weiteren Dichtungsstrang, der vorzugsweise zur randseitigen Abdichtung der Fensterscheibe oder des Teils vorgesehen ist, wobei der weitere Dichtungsstrang bevorzugt aus synthetischem Kautschuk, bevorzugt aus Ethylen-Prophylen-Dien-Kautschuk (EPDM oder thermoplastischem Elastomer (TP), gebildet ist.

In einer weiteren Ausgestaltung der Erfindung ist der weitere Dichtungsstrang, vorzugsweise durch Rastung oder/und Klemmung, mit dem Befestigungselement verbindbar, bevorzugt derart, dass das Befestigungselement und der Dichtungsstrang unmittelbar aneinander halten. Der weitere Dichtungsstrang und das Befestigungselement sind dafür in ihren Formen zweckmäßigerweise so aneinander angepasst, dass sich der weitere Dichtungsstrang an dem Befestigungselement, z.B. durch Klemmen, Stecken oder Rasten, befestigen lässt. Anders als bei den aus dem Stand der Technik bekannten Kombinationen aus Befestigungselement und Dichtungsstrang können bei dieser Ausführungsform das Befestigungselement und der weitere Dichtungsstrang bereits vor ihrer Installation an der Karosserie miteinander verbunden werden. Vorteilhaft kann der Hersteller die erfindungsgemäße Dichtungseinrichtung bereits zusammengesetzt liefern. Die Anordnung der Dichtungseinrichtung an der Karosserie vereinfacht sich dann erheblich und lässt sich in wesentlich kürzerer Zeit durchführen.

Zweckmäßigerweise sind das Befestigungselement und/oder der weitere Dichtungsstrang mit einem oder mehreren Haken versehen, mittels dessen bzw. deren sie sich jeweilig an einem Gegenhalter, der an dem weiteren Dichtungsstrang bzw. dem Befestigungselement vorgesehen ist, ggf. unter Einrastung, befestigen lassen.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: eine Querschnittsdarstellung einer erfindungsgemäßen Dichtungseinrichtung,
- Fig. 2: eine weitere erfindungsgemäße Dichtungseinrichtung im Querschnitt, und
- Fig. 3: eine weitere erfindungsgemäße Dichtungseinrichtung im Querschnitt.

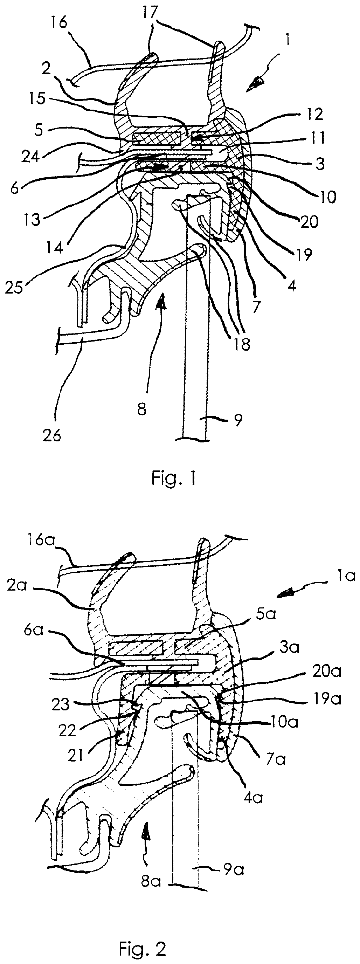

In Fig. 1 ist ein Querschnitt einer erfindungsgemäßen, strangförmigen Dichtungseinrichtung 1 dargestellt, die auf einem Karosserieflansch 6 einer Fahrzeugtür angeordnet ist und zur Abdichtung einer beweglichen Fensterscheibe 9 sowie zur Abdichtung der Fahrzeugtür gegen einen den Türrahmen bildenden Karosserieabschnitt 16 vorgesehen ist.

Die Dichtungseinrichtung 1 umfasst ein Befestigungselement 3, das einen Hauptschenkel 4 sowie einen davon etwa senkrecht vorstehenden Verbindungsschenkel 5 und im Abstand davon einen etwa senkrecht vom Hauptschenkel 4 vorstehenden Klemm- und/oder Rastschenkel 10 aufweist. Auf einer von dem Verbindungsschenkel 5 und dem Klemm- und/oder Rastschenkel 10 abgewandten Seite des Hauptschenkels 4 ist an dem Hauptschenkel 4 eine Zierleiste 7 angeordnet, die den Hauptschenkel 4 auf der genannten Seite vollständig überdeckt und eine Sichtfläche bildet, die von außen sichtbar ist.

An dem Verbindungselement 5 ist ein Dichtungsstrang 2 angeordnet, der zur Abdichtung der Fahrzeugtür gegen den Karosserieabschnitt 16 dient. Der Dichtungsstrang 2 umfasst zwei Schenkel, die zur Anlage an dem Karosserieabschnitt 16 vorgesehen sind und an jeweilig dafür vorgesehenen Anlageflächen 17 mit einer Oberflächenstrukturierung versehen sind. In dem Verbindungsschenkel 5 sind in Längsrichtung im Abstand voneinander mehrere Ausnehmungen 12 gebildet, durch die hindurch von dem Dichtungsstrang 2 ausgehende Zapfen 15 ragen, die derart geformt sind, dass sie in einem Zapfenkopfbereich zwischen dem Karosserieflansch 6 und der dem Karosserieflansch 6 zugewandten Seite des Verbindungsschenkels 5 angeordnet sind und im installierten Zustand sowohl an dem Verbindungsschenkel 5 als auch an dem Karosserieflansch 6 anliegen.

Darüber hinaus umfasst der Dichtungsstrang 2 eine Dichtungsnase 24, die an dem Ende des Verbindungsschenkels 5 angeordnet ist, das von dem Hauptschenkel 4 abgewandt ist, und die den Raum zwischen dem Verbindungsschenkel 5 und dem Karosserieflansch 6 nach außen abdichtet.

Der Verbindungsschenkel 5, der Zapfen 15 und der Klemm- und/oder Rastschenkel 10 sind in derartigen Abständen voneinander angeordnet und weisen eine derartige Form auf, dass zwischen ihnen ein Steckschlitz 11 zur Aufnahme des Karosserieflanschs 6 gebildet wird und dass sie unter Ausbildung einer Klemmwirkung stabil auf den Karosserieflansch 6 aufgesetzt werden können. In dem Klemm- und/oder Rastschenkel 10 sind in Längsrichtung im Abstand voneinander Aussparungen 13 gebildet, die zur passenden Aufnahme von Hakenelementen 14 vorgesehen sind, die von dem Karosserieflansch 6 vorstehen und zum Befestigen der Dichtungseinrichtung 1 am Karosserieflansch 6 vorgesehen sind.

Auf der von der Zierleiste abgewandten Seite des Hauptschenkels 4 und der von dem Verbindungsschenkel 5 abgewandten Seite des Klemm- und/oder Rastschenkels 10 ist an dem Befestigungselement 3 ein weiterer Dichtungsstrang 8 angeordnet, der zum Abdichten der Fensterscheibe 9 vorgesehen ist und dazu mehrere zur Anlage an der Fensterscheibe 9 vorgesehene Dichtungsschenkel 18 aufweist. Auf einer Innenseite des Hauptschenkels 4 ist eine Rastnase 19 gebildet, die als Gegenhalter zu einer an dem weiteren Dichtungsstrang gebildeten Rastnase 20 dient. Der weitere Dichtungsstrang 8 ist ferner zur Abstützung an weiteren Abschnitten 25,26 der Karosserie vorgesehen.

Das Befestigungselement 3, das Zierelement 7 und der Dichtungsstrang 2 sind im Mehrkomponenten-Spritzgussverfahren nacheinander in einer Spritzgießmaschine hergestellt worden, die zwei oder mehrere Spritzeinheiten, aber nur eine Schließeinheit umfasst, sodass die Dichtungseinrichtung 1 mit nur einem einzigen Werkzeug in einem einzigen Arbeitsgang hergestellt werden kann.

In einem ersten Arbeitsschritt wird das Befestigungselement 3 hergestellt und anschließend zunächst die Zierleiste 7 an das Befestigungselement 3 angespritzt und danach der Dichtungsstrang 2 an das Befestigungselement 3 und die Zierleiste 7 angespritzt. Für den letztgenannten Arbeitsschritt ist das Spritzgusswerkzeug derart vorgesehen, dass das Material, das zur Bildung des Dichtungsstrangs 2 vorgesehen ist, durch die Ausnehmungen 12 in dem Verbindungsschenkel 5 hindurch fließen kann, um die Zapfen 15 zu bilden.

Das Befestigungselement 3 ist aus einem Faserverbundwerkstoff gebildet, vorzugsweise mit einer Matrix aus Polyprophylen (PP), Polycarbonat (PC) oder Acrylnitril-Butadien-Styrol (ABS) und mit Glas- oder Kohlefasern als Verstärkungsmaterial.

Die Zierleiste 7 ist aus einem thermoplastischen Kunststoff, je nach erwünschtem Aussehen der Sichtfläche z.B. aus Styrolblockcopolymeren basierendem TPE (TPS) oder aus thermoplastischem Vulkanisat (TPV), aus Polymethylmethacrylat (PMMA), aus einer Mischung aus Polycarbonat und Acrylnitril-Butadien-Styrol (PC/ABS), aus Styrol-Acrylnitril (SAN) oder aus Acrylester-Styrol-Acrylnitril (ASA) gebildet.

Ferner kann die Zierleiste 7 aus einem galvanisierbaren Kunststoff, beispielsweise Acrylnitril-Butadien-Styrol (ABS), gebildet sein, wenn ihr ein metallisches Aussehen verliehen werden soll.

Der Dichtungsstrang 2 ist ebenfalls aus einem thermoplastischen Polymer, z.B. aus TPS oder aus TPV gebildet.

Wenn die Zierleiste 7 mit einer metallisch aussehenden Sichtfläche versehen werden soll, wird das Zierelement 7 aus einem Kunststoff, z.B. ABS, gebildet, der sich zur Belegung mit einer fest am Kunststoff anhaftenden, elektrisch leitfähigen Schicht eignet, auf der sich durch Galvanisieren in einem Galvanisierbad eine Metallschicht abscheiden lässt. Nach Herstellung des Dichtungselements 1 wird das Zierelement in an sich bekannter Weise mittels eines Kunststoffgalvanisierungsverfahrens galvanisiert. Wird zur Herstellung des Befestigungselements 3 und des Dichtungselements 2 ein Kunststoff bzw. Faserverbundwerkstoff verwendet, an dem sich bei Galvanisierung des gesamten Befestigungselements 3 in einem Galvanisierbad kein Metall abscheidet, z.B. da auf ihm keine elektrisch leitfähige Schicht vorgesehen ist, bildet sich die metallisch aussehende Oberfläche ausschließlich am Zierelement 7 aus.

Der weitere Dichtungsstrang 8 ist im vorliegenden Beispiel aus Ethylen-Prophylen-Dien-Kautschuk (EPDM) oder thermoplastischem Elastomer (TPE) gebildet und wird in einem gesonderten Arbeitsgang hergestellt und an das Befestigungselement 3 angesteckt. Vorstellbar wäre aber, auch den weiteren Dichtungsstrang 8 ebenfalls aus einem thermoplastischen Material, z.B. TPS oder TPV, zu bilden und in einem Mehrkomponenten-Spritzgießverfahren direkt an das Befestigungselement 3 anzuformen.

Die Dichtungseinrichtung 1 wird an der Karosserie installiert, indem sie so auf den Karosserieflansch 6 aufgesetzt wird, dass dieser in den Steckschlitz 11 zwischen dem Verbindungsschenkel und dem Klemm- und/oder Rastschenkel 10 hineinragt, wobei die Haken 14 des Karosserieflansches 6 in die Ausnehmungen 13 in dem Klemm- und/oder Rastschenkel 10 einrasten. Die Dichtungseinrichtung 1 wird dann einerseits durch eine Klemmwirkung zwischen dem Klemm- und/oder Rastschenkel 10 und den Zapfen 15 und andererseits durch die Haken 14 am Karosserieflansch 6 festgehalten. Da die Zapfen 15 wie auch der Dichtungsstrang 2 aus einem im Vergleich zu dem Befestigungselement 3 weicheren Material gebildet ist, wird durch die Zapfen 15 ein besonders stabiler Sitz dem Karosserieflansch 6 ermöglicht. Der weitere Dichtungsstrang 8 wird einerseits durch die Rastnase 19 des Hauptschenkels 4 und andererseits durch seine Abstützung an den Karosserieabschnitten 25,26 gehalten. Das Befestigungselement 3 und der weitere Dichtungsstrang 8 werden also erst bei der Installation der Dichtungseinrichtung 1 an dem Karosserieflansch 6 zusammengesetzt und durch die Abstützung an den Karosserieabschnitten 25,26 und an dem Karosserieflansch 6 andererseits aneinander gehalten.

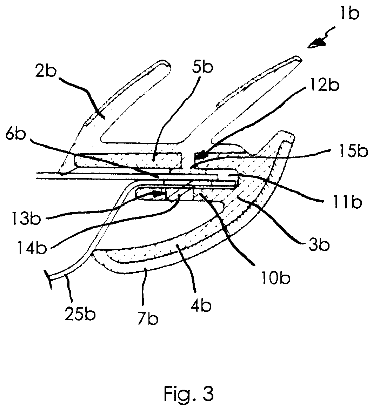

Es wird nun auf die Fig. 2 und 3 Bezug genommen, wo gleiche oder gleichwirkende Teile mit derselben Bezugszahl wie in Fig. 1 bezeichnet sind und der betreffenden Bezugszahl jeweils ein Buchstabe beigefügt ist.

Eine weitere, in Fig. 2 gezeigte erfindungsgemäße Dichtungseinrichtung 1a unterscheidet sich von derjenigen nach Fig. 1 durch die Form seines Klemm- und/oder Rastschenkels 10a seines Befestigungselements 3a. An einem Ende eines Klemm- und/oder Rastschenkels 10a, das von einem Hauptschenkel 4a abgewandt ist, ist eine Abwinklung in Richtung weg von einem Verbindungsschenkel 5a gebildet, die auf ihrer dem Hauptschenkel 4a zugewandten Seite mit einer Rastnase 22 versehen ist, welche als Gegenhalter für eine an einem weiteren Dichtungsstrang 8a gebildete Rastnase 23 vorgesehen ist.

Der weitere Dichtungsstrang 8a kann in den Raum zwischen dem Klemm- und/oder Rastschenkel 10a und dem Hauptschenkel 4a eingesteckt werden und hält dort durch Rastwirkungen der genannten Rastnasen 22,23 und einer auf der Innenseite des Hauptschenkels 4a gebildeten Rastnase 19a und einer weiteren, an dem weiteren Dichtungsstrang 8a gebildeten Rastnase 20a.

Der weitere Dichtungsstrang 8a kann schon vor der Installation an der Karosserie so an dem Befestigungselement 3a befestigt werden, dass er dort selbsttätig hält. Der Installationsaufwand der so bereits zusammengesetzten Dichtungseinrichtung 1a vereinfacht sich dadurch, beispielsweise im Vergleich zu der Dichtungseinrichtung nach Fig. 1, deutlich.

In Fig. 3 ist eine weitere erfindungsgemäße Dichtungseinrichtung 1b gezeigt, die zur Dichtung eines Fensterschachts geeignet ist. Die Dichtungseinrichtung 1b unterscheidet sich von derjenigen nach den Fig. 1 und 2 insbesondere durch die Form eines Dichtungsstrangs 2b, die derart vorgesehen ist, dass der Dichtungsstrang 2b sich zur Abdichtung einer in dem Fensterschacht anzuordnenden Fensterscheibe eignet. Ferner weisen ein Befestigungselement 3b und eine Zierleiste 7b zur Dichtung des Fensterschachts angepasste Formen auf, wobei ein Hauptschenkel 4b des Befestigungselements 3b sowie die Zierleiste 7b derart geformt sind, dass ein von dem Dichtungsstrang 2b abgewandtes Ende der Zierleiste 7b an einem unteren Abschnitt 25b eines Karosserieflanschs 6b anliegt.

Sowohl bei der Dichtungseinrichtung 1a nach Fig. 2 als auch bei der Dichtungseinrichtung 1b nach Fig. 3 werden das Befestigungselement 3a,3b, die Zierleiste 7a,7b und der Dichtungsstrang 2a,2b wie oben für die Dichtungseinrichtung 1 nach Fig. 1 mittels Mehrkomponenten-Spritzgießen in einem einzigen Arbeitsgang hergestellt. Verwendet werden können dazu die oben für den Dichtungsstrang 1 genannten Werkstoffe. Einer Sichtfläche der Zierleiste 7a,7b kann wie oben erläutert mittels eines Kunststoffgalvanisierungsverfahrens ein metallisches Aussehen gegeben werden.

## Patentansprüche

1. Einrichtung zur randseitigen Dichtung eines Teils oder einer Fensterscheibe (9) einer Fahrzeugkarosserie, die ein Befestigungselement (3) aufweist, mittels dessen sich die Dichtungseinrichtung (1) an einem Karosserieflansch (6) befestigen lässt und das zum Halten zumindest eines Dichtungsstrangs (2) vorgesehen ist, wobei das Befestigungselement (3) einen Hauptschenkel (4) umfasst, an dem ein Zierelement (7) befestigt ist, das eine nach Installation an der Fahrzeugkarosserie sichtbare Sichtfläche aufweist, und zumindest einen von dem Hauptschenkel (4) abstehenden Verbindungsschenkel (5) umfasst, der zur Aufnahme des Dichtungsstrangs (2) vorgesehen ist, wobei das Befestigungselement (3) sowie das Zierelement (7) und/oder der Dichtungsstrang (2) aus Kunststoff oder Faserverbundwerkstoff gebildet sind und **dadurch gekennzeichnet, daß** das Befestigungselement (3) sowie das Zierelement (7) und der Dichtungsstrang (2) mittels Mehrkomponenten-Spritzgießen hergestellt und aneinander angeformt sind.

2. Einrichtung nach Anspruch 1,
**dadurch gekennzeichnet,**
**dass** das Zierelement (7) aus einem Kunststoff, vorzugsweise aus Acrylnitril-Butadien-Styrol (ABS), gebildet ist, der sich dazu eignet, zur Metallisierung des Kunststoffs mit einer elektrisch leitfähigen Schicht belegt zu werden, auf der sich durch Galvanisieren eine Metallschicht abscheiden kann.

3. Einrichtung nach Anspruch 1 oder 2,
**dadurch gekennzeichnet,**
**dass** das Zierelement (7) aus einem thermoplastischen Kunststoff, bevorzugt aus auf Styrolblockcopolymeren basierendem thermoplastischem Elastomer (TPS) oder aus thermoplastischem Vulkanisat (TPV), aus Polymethylmethacrylat (PMMA), aus Polycarbonat/Acrylnitril-Butadien-Styrol (PC/ABS), aus Styrol-Acrylnitril (SAN) oder/und aus Acrylester-Styrol-Acrylnitril (ASA), gebildet ist.

4. Einrichtung nach einem der Ansprüche 1 bis 3,
**dadurch gekennzeichnet,**
**dass** der Befestigungselement (3) aus dem Faserverbundwerkstoff gebildet ist und der Faserverbundwerkstoff vorzugsweise als Matrix zumindest einen der Kunststoffe Polypropylen (PP), Polycarbonat (PC) oder Acrylnitril-Butadien-Styrol (ABS) und/oder eine Faserverstärkung, vorzugsweise aus Glas- oder/und Kohlefasern, aufweist.

5. Einrichtung nach einem der Ansprüche 1 bis 4,
**dadurch gekennzeichnet,**
**dass** der Dichtungsstrang (2) aus einem thermoplastischen Polymer, vorzugsweise aus auf Styrolblockcopolymeren basierendem thermoplastischem Elastomer (TPS) oder aus thermoplastischem Vulkanisat (TPV), gebildet ist.

6. Einrichtung nach einem der Ansprüche 1 bis 5,
**dadurch gekennzeichnet,**
**dass** das Befestigungselement (3) einen von dem Hauptschenkel (4) abstehenden Klemm- und/oder Rastschenkel (10) aufweist, der derart angeordnet ist, dass zwischen dem Klemm- und/oder Rastschenkel (10) und dem Verbindungsschenkel (5) ein Steckschlitz (11) gebildet ist, in den der Karosserieflansch (6) zur Befestigung der Dichtungseinrichtung (1) einsteckbar ist, wobei der Klemm- und/oder Rastschenkel (10) und der Verbindungsschenkel (5) vorzugsweise derart vorgesehen sind, dass sich die Dichtungseinrichtung (1) bei Anordnung durch Klemm- und/oder Rastwirkung des Klemm- und/oder Rastschenkels (10) und des Verbindungsschenkels (5) auf dem Karosserieflansch (6) befestigen lässt.

7. Einrichtung nach einem der Ansprüche 1 bis 6,
**dadurch gekennzeichnet,**
**dass** der Verbindungsschenkel (5) und/oder der Klemm- und/oder Rastschenkel (10) mit Aussparungen (12,13) versehen sind.

8. Einrichtung nach Anspruch 7,
**dadurch gekennzeichnet,**
**dass** an dem Dichtungsstrang (2) vorstehende Zapfen (15) gebildet sind, die durch die Aussparungen (12) hindurch ragen und zur Anlage an dem Karosserieflansch (6) vorgesehen sind, um dem Befestigungselement (3) bei seiner Befestigung an dem Karosserieflansch (6) Halt zu geben.

9. Einrichtung nach einem der Ansprüche 1 bis 8,
**dadurch gekennzeichnet,**
**dass** die Dichtungseinrichtung (1;1a) ein, vorzugsweise durch Rastung oder/und Klemmung, mit dem Befestigungselement (3;3a) verbindbaren, weiteren Dichtungsstrang (8;8a) umfasst, der vorzugsweise zur randseitigen Abdichtung der Fensterscheibe (9;9a) oder des Teils vorgesehen ist, wobei der weitere Dichtungsstrang (8;8a) und das Befestigungselement (3a) in ihren Formen bevorzugt derart aneinander angepasst sind, dass sie bei gegenseitiger Verbindung selbsttätig aneinander halten.

10. Verfahren zur Herstellung einer Einrichtung zur randseitigen Dichtung eines Teils oder einer Fensterscheibe (9) einer Fahrzeugkarosserie, die ein Befestigungselement (3) aufweist, mittels dessen sich die Dichtungseinrichtung (1) an einem Karosserieflansch (6) befestigen lässt und das zum Halten eines Dichtungsstrangs (2) vorgesehen ist, wobei das Befestigungselement (3) einen Hauptschenkel (4) umfasst, an dem Zierelement (7) befestigt ist, das eine nach Installation an der Fahrzeugkarosserie sichtbare Sichtfläche aufweist, und zumindest einen von dem Hauptschenkel (4) abstehenden Verbindungsschenkel (5) umfasst, der zur Aufnahme des Dichtungsstrangs (2) vorgesehen ist, **dadurch gekennzeichnet,**
**dass** das Befestigungselement (3) sowie das Zierelement (7) und/oder der Dichtungsstrang (2) aus Kunststoff oder/und Faserverbundwerkstoff gebildet werden und das Befestigungselement (3) einerseits sowie das Zierelement (7) und der Dichtungsstrang (2) andererseits mittels Spritzgießen hergestellt und aneinander angeformt werden, wobei das Befestigungselement (3) sowie das Zierelement (7) und der Dichtungsstrang (2) mittels Mehrkomponenten-Spritzgießen hergestellt werden.

11. Verfahren nach Anspruch 10,
**dadurch gekennzeichnet,**
**dass** das Zierelement (7) aus einem Kunststoff, vorzugsweise Acrylnitril-Butadien-Styrol (ABS) gebildet wird, der sich dazu eignet, zur Metallisierung des Kunststoff mit einer elektrisch leitfähigen Schicht belegt zu werden, auf der sich durch Galvanisieren eine Metallschicht abscheiden kann.

12. Verfahren nach Anspruch 10 oder 11,
**dadurch gekennzeichnet,**
**dass** in dem Hauptschenkel (4) oder/und in einem Klemm- und/oder Rastschenkel (10) des Befestigungselements (13) eine Aussparung (12) gebildet wird und beim Spritzgießen Kunststoffmaterial, mittels dessen der Dichtungsstrang (2) gebildet wird, zur Bildung von Zapfen (15), die von dem Dichtungsstrang (2) vorstehen, durch die Aussparung (12) hindurch gespritzt wird.

## Claims

1. Device for the edge sealing of a part or a window pane (9) of a vehicle body, which device has a fastening element (3) by means of which the sealing device (1) can be fastened to a body flange (6) and which is provided to hold at least one sealing strand (2), wherein the fastening element (3) comprises a main leg (4), to which is fastened a decorative element (7) which has a visible surface that can be seen after installation on the vehicle body, and comprises at least one connecting leg (5), which protrudes from the main leg (4) and is provided to receive the sealing strand (2),
wherein
the fastening element (3) and also the decorative element (7) and/or the sealing strand (2) are formed from plastics material or fibre composite material,
and **characterized in that**
the fastening element (3) and also the decorative element (7) and the sealing strand (2) are produced by multiple-component injection moulding and moulded on one another.

2. Device according to Claim 1,
**characterized in that**
the decorative element (7) is formed from a plastics material, preferably from acrylonitrile-butadiene-styrene (ABS), which is suitable, for the purpose of metallizing the plastics material, for being lined with an electrically conductive layer on which a metal layer can be galvanically deposited.

3. Device according to Claim 1 or 2,
**characterized in that**
the decorative element (7) is formed from a thermoplastic material, preferably from a thermoplastic elastomer based on styrene block copolymers (TPS) or from a thermoplastic vulcanizate (TPV), from polymethyl methacrylate (PMMA), from polycarbonate/acrylonitrile-butadiene-styrene (PC/ABS), from styrene acrylonitrile (SAN) or/and acrylonitrile-styrene-acrylate (ASA).

4. Device according to one of Claims 1 to 3,
**characterized in that**
the fastening element (3) is formed from the fibre composite material and the fibre composite material preferably comprises at least one of the plastics materials polypropylene (PP), polycarbonate (PC) or acrylonitrile-butadiene-styrene (ABS) as matrix, and/or a fibre reinforcement, preferably made of glass fibres or/and carbon fibres.

5. Device according to one of Claims 1 to 4,
**characterized in that**
the sealing strand (2) is formed from a thermoplastic polymer, preferably from a thermoplastic elastomer based on styrene block copolymers (TPS) or from a thermoplastic vulcanizate (TPV).

6. Device according to one of Claims 1 to 5,
**characterized in that**
the fastening element (3) has a clamping and/or latching leg (10) which protrudes from the main leg (4) and is arranged in such a way that an insertion slot (11), into which the body flange (6) can be inserted in order to fasten the sealing device (1), is formed between the clamping and/or latching leg (10) and the connecting leg (5), wherein the clamping and/or latching leg (10) and the connecting leg (5) are preferably provided such that, upon arrangement of the sealing device (1), it can be fastened on the body flange (6) by the clamping and/or latching action of the clamping and/or latching leg (10) and the connecting leg (5).

7. Device according to one of Claims 1 to 6,
**characterized in that**
the connecting leg (5) and/or the clamping and/or latching leg (10) are/is provided with cutouts (12, 13).

8. Device according to Claim 7,
**characterized in that**
protruding journals (15) are formed on the sealing strand (2) which project through the cutouts (12) and are provided for abutment against the body flange (6), in order to secure the fastening element (3) when it is being fastened to the body flange (6).

9. Device according to one of Claims 1 to 8,
**characterized in that**
the sealing device (1; 1a) comprises a further sealing strand (8; 8a) which can be connected, preferably by latching or/and clamping, to the fastening element (3; 3a) and is preferably provided for the edge sealing of the window pane (9; 9a) or the part, wherein the shapes of the further sealing strand (8; 8a) and the fastening element (3a) are preferably matched to one another in such a way that they are independently held on one another upon being connected together.

10. Method for producing a device for the edge sealing of a part or a window pane (9) of a vehicle body, which device has a fastening element (3) by means of which the sealing device (1) can be fastened to a body flange (6) and which is provided to hold a sealing strand (2), wherein the fastening element (3) comprises a main leg (4), to which is fastened a decorative element (7) which has a visible surface that can be seen after installation on the vehicle body, and comprises at least one connecting leg (5), which protrudes from the main leg (4) and is provided to receive the sealing strand (2), **characterized in that**
the fastening element (3) and the decorative element (7) and/or the sealing strand (2) are formed from plastics material or/and fibre composite material, and the fastening element (3), on the one hand, and also the decorative element (7) and the sealing strand (2), on the other hand, are produced by injection moulding and moulded on one another, wherein the fastening element (3) and also the decorative element (7) and the sealing strand (2) are produced by multiple-component injection moulding.

11. Method according to Claim 10,
**characterized in that**
the decorative element (7) is formed from a plastics material, preferably acrylonitrile-butadiene-styrene (ABS), which is suitable, for the purpose of metallizing the plastics material, for being lined with an electrically conductive layer on which a metal layer can be galvanically deposited.

12. Method according to Claim 10 or 11,
**characterized in that**
a cutout (12) is formed in the main leg (4) or/and in a clamping and/or latching leg (10) of the fastening element (3), and, during the injection moulding, plastics material by means of which the sealing strand (2) is formed is injected through the cutout (12) in order to form journals (15) which project from the sealing strand (2) .

## Revendications

1. Dispositif pour former une étanchéité au niveau du bord d'une partie ou d'une vitre (9) d'une carrosserie de véhicule, lequel dispositif présente un élément de fixation (3) au moyen duquel le dispositif d'étanchéité (1) peut être fixé à une bride de carrosserie (6) et conçu pour retenir au moins un profilé d'étanchéité (2), l'élément de fixation (3) comprenant une patte principale (4), à laquelle est fixé un élément décoratif (7) qui présente une surface apparente visible après l'installation sur la carrosserie de véhicule, et au moins une patte de liaison (5) s'étendant à partir de la patte principale (4) et conçue pour recevoir le profilé d'étanchéité (2), l'élément de fixation (3) ainsi que l'élément décoratif (7) et/ou le profilé d'étanchéité (2) étant réalisés en matériau synthétique ou en matériau composite fibreux et **caractérisé en ce que** l'élément de fixation (3) ainsi que l'élément décoratif (7) et le profilé d'étanchéité (2) sont fabriqués par moulage par injection de composants multiples et moulés les uns aux autres.

2. Dispositif selon la revendication 1, **caractérisé en ce que** l'élément décoratif (7) est formé à partir d'un matériau synthétique, de préférence à partir d'acrylonitrile-butadiène-styrène (ABS), qui convient, pour la métallisation du matériau synthétique, pour être revêtu par une couche électriquement conductrice sur laquelle une couche métallique peut être déposée par galvanisation.

3. Dispositif selon la revendication 1 ou 2, **caractérisé en ce que** l'élément décoratif (7) est formé à partir d'un matériau synthétique thermoplastique, de préférence à partir d'un élastomère thermoplastique à base de copolymères séquencés de styrène (TPS) ou à partir d'un produit de vulcanisation thermoplastique (TPV), à partir de poly(méthacrylate de méthyle) (PMMA), à partir de polycarbonate/acrylonitrile-butadiène-styrène (PC/ABS), à partir de styrène-acrylonitrile (SAN) ou/et à partir d'ester acrylique-styrène-acrylonitrile (ASA).

4. Dispositif selon l'une quelconque des revendications 1 à 3, **caractérisé en ce que** l'élément de fixation (3) est formé à partir du matériau composite fibreux et le matériau composite fibreux présente de préférence, comme matrice, au moins l'un des matériaux synthétiques polypropylène (PP), polycarbonate (PC) ou acrylonitrile-butadiène-styrène (ABS) et/ou un renforcement fibreux, de préférence en fibres de verre et/ou en fibres de carbone.

5. Dispositif selon l'une quelconque des revendications 1 à 4, **caractérisé en ce que** le profilé d'étanchéité (2) est formé à partir d'un polymère thermoplastique, de préférence à partir d'un élastomère thermoplastique à base de copolymères séquencés de styrène (TPS) ou à partir d'un produit de vulcanisation thermoplastique (TPV).

6. Dispositif selon l'une quelconque des revendications 1 à 5, **caractérisé en ce que** l'élément de fixation (3) présente une patte de serrage et/ou d'encliquetage (10) s'étendant à partir de la branche principale (4) et qui est agencée de manière telle qu'une fente d'insertion (11) est formée entre la patte de serrage et/ou d'encliquetage (10) et la patte de liaison (5), dans laquelle la bride de carrosserie (6) peut être insérée pour la fixation du dispositif d'étanchéité (1), la patte de serrage et/ou d'encliquetage (10) et la patte de liaison (5) étant de préférence conçue(s) de manière telle que le dispositif d'étanchéité (1) peut être fixé sur la bride de carrosserie (6) lors de l'agencement par l'intermédiaire d'un effet de serrage et/ou d'encliquetage de la patte de serrage et/ou d'encliquetage (10) et de la patte de liaison (5).

7. Dispositif selon l'une quelconque des revendications 1 à 6, **caractérisé en ce que** la patte de liaison (5) et/ou la patte de serrage et/ou d'encliquetage (10) est/sont pourvue(s) d'évidements (12,13).

8. Dispositif selon la revendication 7, **caractérisé en ce que** des tétons (15) en saillie sont formés sur le profilé d'étanchéité (2), lesquels tétons passent à travers les évidements (12) et sont conçus pour se placer contre la bride de carrosserie (6) pour soutenir l'élément de fixation (3) lors de sa fixation à la bride de carrosserie (6).

9. Dispositif selon l'une quelconque des revendications 1 à 8, **caractérisé en ce que** le dispositif d'étanchéité (1 ; 1a) présente un autre profilé d'étanchéité (8; 8a), pouvant être relié à l'élément de fixation (3 ; 3a), de préférence par encliquetage et/ou par serrage, lequel autre profilé d'étanchéité est de préférence conçu pour la fermeture étanche au niveau du bord de la vitre (9 ; 9a) ou de la partie, les formes de l'autre profilé d'étanchéité (8 ; 8a) et de l'élément de fixation (3a) étant adaptées de préférence l'une à l'autre de manière telle qu'elles se fixent automatiquement l'une à l'autre lors de leur assemblage mutuel.

10. Procédé pour la fabrication d'un dispositif d'étanchéité au niveau du bord d'une partie ou d'une vitre (9) d'une carrosserie de véhicule, lequel dispositif présente un élément de fixation (3) au moyen duquel le dispositif d'étanchéité (1) peut être fixé à une bride de carrosserie (6) et conçu pour retenir au moins un profilé d'étanchéité (2), l'élément de fixation (3) comprenant une patte principale (4) à laquelle est fixé un élément décoratif (7) qui présente une surface apparente visible après l'installation sur la carrosserie de véhicule, et au moins une patte de liaison (5) s'étendant à partir de la patte principale (4) et conçue pour recevoir le profilé d'étanchéité (2), **caractérisé en ce que** l'élément de fixation (3) ainsi que l'élément décoratif (7) et/ou le profilé d'étanchéité (2) sont formés à partir de matériau synthétique et/ou de matériau composite fibreux et l'élément de fixation (3) d'une part ainsi que l'élément décoratif (7) et le profilé d'étanchéité (2) d'autre part sont fabriqués par moulage par injection et moulés les uns aux autres, l'élément de fixation (3) ainsi que l'élément décoratif (7) et le profilé d'étanchéité (2) étant fabriqués par moulage par injection de composants multiples.

11. Procédé selon la revendication 10, **caractérisé en ce que** l'élément décoratif (7) est formé à partir d'un matériau synthétique, de préférence à partir d'acrylonitrile-butadiène-styrène (ABS), qui convient, pour la métallisation du matériau synthétique, pour être revêtu par une couche électriquement conductrice sur laquelle une couche métallique peut être déposée par galvanisation.

12. Procédé selon la revendication 10 ou 11, **caractérisé en ce qu'**un évidement (12) est formé dans la patte principale (4) et/ou dans une patte de serrage et/ou d'encliquetage (10) de l'élément de fixation (3) et, lors du moulage par injection, du matériau synthétique, au moyen duquel le profilé d'étanchéité (2) est formé, est injecté à travers l'évidement (12) pour former des tétons (15) qui font saillie à partir du profilé d'étanchéité (2).
